# EUROPÄISCHE PATENTSCHRIFT

(11) **EP 2 279 093 B1**
(45) Veröffentlichungstag und Bekanntmachung des Hinweises auf die Patenterteilung: **15.08.2012**
(21) Anmeldenummer: 09745573.7
(22) Anmeldetag: 15.05.2009
(51) Int. Cl.: B60N 2/235

(54) **BESCHLAG**
FITTING
FERRURE

(30) Priorität: 16.05.2008 DE 102008024052
(43) Veröffentlichungstag der Anmeldung: 02.02.2011
(73) Patentinhaber: Brose Fahrzeugteile GmbH & Co. Kommanditgesellschaft Coburg, 96450 Coburg (DE)
(72) Erfinder: STEFFEN, Oliver, 96450 Coburg (DE); FASSBENDER, Frank, 96450 Coburg (DE)
(74) Vertreter: FDST Patentanwälte
(86) Internationale Anmeldenummer: PCT/EP2009/003457
(87) Internationale Veröffentlichungsnummer: WO 2009/138239

(56) Entgegenhaltungen:
- DE-A1- 4 441 159
- DE-B3-102004 035 599
- DE-C1- 19 904 300
- US-B2- 6 824 216

## Beschreibung

Die Erfindung betrifft einen Beschlag entsprechend den Merkmalen des Oberbegriffs des Patentanspruchs 1.

Ein solcher Beschlag dient insbesondere der positionierbaren Verstellung der Lehne eines Fahrzeugsitzes gegenüber dem Sitzunterteil. Dazu wird beispielsweise mittels eines Betätigungshebels über das Antriebselement zunächst der Sperr-Riegel aus seiner Sperrposition, in welcher die beiden Beschlagteile zueinander verriegelt sind, zurückgeholt. Anschließend werden die Beschlagteile, insbesondere durch eine Neigungsverstellung der angebundenen Lehne, zueinander bis zum Erreichen einer gewünschten Zielposition verstellt und der Betätigungshebel losgelassen. Der Sperr-Riegel, der in der Regel mittels des Antriebselements zur Sperrposition hin vorgespannt ist, kehrt daraufhin in die Sperrposition zurück, so dass die beiden Beschlagteile nun in der Zielposition wieder verriegelt sind. Die Lehnenneigung ist verstellt und verriegelt.

Ein Beschlag der eingangs genannten Art ist beispielsweise aus der DE 199 04 300 C1 oder der De 10 2004 035 599 B3 bekannt.

Aus der DE 44 41 159 A1 ist ein Beschlag bekannt, wobei das Antriebselement einen Betätigungsnocken und eine Rückholklinke aufweist. Dabei stützt sich der Betätigungsnocken radial gegen ein Riegelende und treibt den Sperr-Riegel radial nach außen in seine Sperrposition. Die Rückholklinke greift in eine entsprechende Tasche des Sperr-Riegels ein und holt den Sperr-Riegel aus seiner Sperrposition radial nach innen in seine Löseposition zurück. Durch ein wechselweises Betätigen des Antriebselements in entgegengesetzte Drehrichtungen kann somit der Sperr-Riegel zwischen seiner Sperrposition und seiner Löseposition hin und her bewegt werden.

Weiter ist aus der US 6,824,216 B2 ein Beschlag bekannt, wobei ein Antriebselement mit einem separaten Antriebsnocken vorgesehen ist, der ein Schieberelement quer zur Verstellrichtung des Sperr-Riegels antreibt. Das Schieberelement weist eine Rückholklinke sowie Anschlagrampen auf, wobei die Anschlagrampen im Zusammenspiel mit der Rückholklinke im Falle eines seitlichen Antriebs ein Hin- und Herbewegen des Sperr-Riegels bewirken.

Entsprechend der e.g. DE 10 2004 035 599 B3 weist ein Beschlag der eingangs genannten Art zur Betätigung des Sperr-Riegels einen separaten Antriebsexzenter und eine separate Kulissenscheibe auf. Der Antriebsexzenter treibt hierbei den Sperr-Riegel radial nach außen in seine Sperrposition. Die Kulissenscheibe wirkt mit einem Zapfen des Sperr-Riegels zusammen und holt den Sperr-Riegel aus seiner Sperrposition radial nach innen in seine Löseposition zurück. Durch ein wechselweises Betätigen des Antriebselements in entgegengesetzte Drehrichtungen wird somit der Sperr-Riegel zwischen seiner Sperr- und seiner Löseposition hin und her bewegt.

Üblicherweise wird ein derartiger Beschlag vor seinem Einsatz mittels eines Tauchlackier-Verfahrens, insbesondere mittels eines kathodischen Tauchlackier-Verfahrens, mit Lack beschichtet, um eine höhere Korrosionsbeständigkeit zu erzielen. Dabei muss ein Eindringen des Lackes in das Innere des Beschlages verhindert werden, da eingedrungener Lack unerwünschterweise auch die das Gesperre bildenden mechanischen Teile beaufschlagt. Unter Umständen kann nämlich in diesem Fall das mechanische Gesperre infolge des aufgebrachten Lackes nurmehr ungenügend oder gar nicht ausgebildet werden, so dass bei einem verriegelten Beschlag das übertragbare Moment deutlich reduziert sein kann. Als Folge genügt die Crashfestigkeit des Beschlags nicht mehr den sicherheitstechnischen Anforderungen.

Entsprechend der e.g. DE 199 04 300 C1 ist eine Axialsicherung vorgesehen, wobei ein Flanschabschnitt auch als Dichtung gegen Lackeintritt bei einer Tauchlackierung des Beschlags wirkt.

Aufgabe der Erfindung ist es, einen Beschlag der eingangs genannten Art anzugeben, bei welchem mit möglichst einfachen und kostengünstigen Mitteln das Eindringen von Lack in das Innere während eines Tauchlackierverfahrens erschwert ist.

Diese Aufgabe wird für einen Beschlag der eingangs genannten Art erfindungsgemäß dadurch gelöst, dass zu einer Abdichtung des jeweiligen Axialspaltes zwischen dem

Antriebselement und den Beschlagteilen als ein elastisches Dichtmittel ein erstes Dichtelement zwischen dem ersten Beschlagteil und der Betätigungsscheibe, und ein zweites Dichtelement zwischen dem zweiten Beschlagteil und der Rückholscheibe angeordnet ist.

Die Erfindung geht dabei von der Überlegung aus, dass der angegebene Beschlag einen zentralen, axialen Zugang zum Antriebselement aufweist, um das zwischen den Beschlagteilen angeordnete Antriebselement insbesondere über eine Antriebswelle oder dergleichen betätigen zu können. Weiter geht die Erfindung von der Tatsache aus, dass das Antriebselement zur Betätigung des Sperr-Riegels zwischen den Beschlagteilen beweglich angeordnet ist, wozu ein gewisses axiales Spiel notwendig ist. Über einen Axialspalt zwischen dem Antriebselement und den Beschlagteilen kann aber durch den zentralen Zugang zum Antriebselement im Falle einer Tauchlackierung Lack leicht in das Innere des Beschlags gelangen und die mechanischen Teile zur Ausbildung des Gesperres zwischen dem Sperr-Riegel und dem ersten Beschlagteil unerwünschterweise beaufschlagen.

Werden jedoch die Dichtelemente jeweils zwischen dem Antriebselement und den Beschlagteilen eingesetzt, so wird dieser Zugangsweg für den Lack verschlossen.

Ein Eindringen des Lackes in das Innere des Beschlags über einen radial äußeren Axialspalt zwischen den beweglich gelagerten Beschlagteilen ist ergänzend behindert, falls die Beschlagteile über einen äußeren Haltering in axialer Richtung gegeneinander gehalten sind, der den Axialspalt zwischen den Beschlagteilen abdeckt und insofern eine Dichtfunktion im Sinne eines Erschwerens eines Eindringens von Lack aufweist.

Die Erfindung bietet den weiteren Vorteil, dass im Inneren des Beschlags befindliches Fett zur Schmierung oder dergleichen während des Tauchlackier-Verfahrens nicht ausgewaschen werden kann. Insofern weist das Dichtmittel eine Doppelfunktion auf, nämlich ein Abdichten des Inneren gegenüber einem Eindringen von Lack und gegenüber einem Austreten von im Inneren befindlichem Fett.

Das Dichtmittel als solches kann den spezifischen Ausgestaltungen des Antriebselements und den Beschlagteilen angepasst sein. Insbesondere kann es der Kontur der sich ergebenden Axialspalte entlang geführt werden. . Als elastisches Material für das Dichtmittel eignet sich grundsätzlich jedes Elastomer, solange es genügend formbeständig ist und insbesondere einem kathodischen Tauchlackierverfahren stand hält. Insbesondere sollte das Material Temperaturen bis etwa 200 C° stand halten. Als Material ist ein geeigneter Kunststoff oder Gummi vorstellbar. Bevorzugt wird als Material für das Dichtmittel ein Polyamid eingesetzt.

Das Antriebselement weist eine zentrale Ausnehmung zur Aufnahme einer Antriebswelle auf, wobei das Dichtelement am Rand der zentralen Ausnehmung angeordnet ist. Die zentrale Ausnehmung ist insbesondere unrund oder in Form eines Mehrkants ausgeführt, so dass eine formschlüssige und drehfeste Verbindung mit einer Antriebswelle hergestellt werden kann. Das Dichtmittel kann dann außen dem Rand der Ausnehmung entlang geführt sein und hierbei den jeweiligen Axialspalt des Antriebselemtens zu einem Beschlagteil abdichten.

Die Abdichtung der Axialspalte kann beispielsweise mittels Dichtlippen geeigneter Form erfolgen.

Das Antriebselement des Beschlags umfasst weiter eine Betätigungsscheibe mit einem Exzentemocken zur radialen Abstützung des Sperr-Riegels und eine in axialer Richtung zum zweiten Beschlagteil versetzte Rückhoischeibe zur Rückholung des Sperr-Riegels, wobei ein erstes Dichtelement zwischen dem ersten Beschlagteil und der Betätigungsscheibe und ein zweites Dichtelement zwischen dem zweiten Beschlagteil und der Rückholscheibe angeordnet ist.

Durch diese Ausgestaltung des Antriebselements kann die Funktion des Ausrückens des Sperr-Riegels von der Funktion des Rückholens getrennt werden. Dies ist sinnvoll, da die radiale Ausstellung des Sperr-Riegels dem verriegelten Zustand des Beschlags entspricht, in der hohe Momente übertragen werden müssen, wogegen dies beim Rückholen des Sperr-Riegels nicht erforderlich ist. Über einen an einer Betätigungsscheibe angeordneten Exzenter-Nocken, an dem sich der Sperr-Riegel abstützt, kann eine hohe Momentübertragung bewerkstelligt werden. Auch kann über den gegen den Sperr-Riegel wirkenden Exzentemocken leicht die benötigte Schließkraft des Gesperres erzielt werden. Die Trennung der Funktionen erfolgt über den axialen Versatz der Rückholscheibe gegenüber der Betätigungsscheibe. Die Abdichtung des Axialspaltes zwischen der Betätigungsscheibe und dem ersten Beschlagteil bewirkt ein erstes, und die Abdichtung zwischen der Rückholscheibe und dem zweiten Beschlagteil ein zweites Dichtelement. Sind die Betätigungsscheibe und die Rückholscheibe gegeneinander beweglich und insbesondere als separate Bauteile ausgeführt, so kann ein zusätzliches Dichtelement zur Abdichtung des Axialspaltes zwischen der Rückholscheibe und der Betätigungsscheibe eingebracht sein. Ein solches Dichtelement ist aber nicht erforderlich, sofern die Rückholscheibe und die Betätigungsscheibe ein einstückiges Bauteil bilden.

Vorteilhafterweise weist das erste Beschlagteil eine zentrale Bohrung auf, in die eine zur Betätigungsscheibe offene Nut eingesenkt ist, deren Nutgrund gegenüber der in das Antriebselement einzebrachten zentralen Ausnehmung einen größeren Durchmesser aufweist, und wobei als erstes Dichtelement ein Dichtring in die Nut eingesetzt ist. Durch diese Ausgestaltung wird mit einfachen und kostengünstigen Mitteln eine Abdichtung des Axialspaltes zwischen dem Antriebselement und dem ersten Beschlagteil erzielt. Der Dichtring wird hierzu einfach in die entsprechende Nut eingesetzt, wobei er elastisch gegen den Rand der zentralen Ausnehmung des Antriebselements wirkt.

In einer weiteren vorteilhaften Ausgestaltung ist die zentrale Ausnehmung in die Betätigungsscheibe und jeweils eine zentrale Bohrung in die Rückholscheibe sowie in das zweite Beschlagteil eingebracht, wobei die zentrale Bohrung der Rückholscheibe gegenüber der zentralen Ausnehmung der Betätigungsscheibe und gegenüber der Bohrung des zweiten Beschlagteils einen größeren Durchmesser aufweist, und wobei als zweites Dichtelement ein Dichtring in den resultierenden Ringspalt zwischen dem zweiten Beschlagteil und der Betätigungsscheibe eingesetzt ist.

Mit anderen Worten ist bei der letztgenannten Ausgestaltungsvariante der innere Umfang der zentralen Bohrung der Rückholscheibe gegenüber der zentralen Ausnehmung in der Betätigungsscheibe und gegenüber der zentralen Bohrung des zweiten Beschlagteils vergrößert, so dass der entsprechende Rand der Rückholscheibe radial zurückversetzt erscheint. Aus diesem Zurücksetzen des inneren Randes der Rückholscheibe resultiert ein Ringspalt zwischen der Betätigungsscheibe und dem zweiten Beschlagteil. In diesen Ringspalt wird als zweites Dichtelement wiederum ein Dichtring eingesetzt, der auf einfache Weise nun nicht nur den Axialspalt zwischen der Rückholscheibe und dem zweiten Beschlagteil sondern zugleich einen gegebenenfalls vorhandenen Axialspalt zwischen der Rückholscheibe und der Betätigungsscheibe gegenüber der Drehachse abdichtet. Mit anderen Worten erlaubt es diese Konstruktion, mit einem einfachen Dichtring drei Bauteile zueinander abzudichten. Die Rückholscheibe und die Betätigungsscheibe können insofern als separate Bauteile gefertigt sein, die ein Axialspiel zueinander aufweisen.

In einer besonders bevorzugten Ausführungsvariante weist nun die Nut am ersten Beschlagteil eine axiale Breite auf, die in etwa der axialen Breite der Rückholscheibe entspricht, so dass in den Ringspalt und in die Nut identische Dichtringe eingesetzt werden können. Bei dieser Ausführung können einfach gefertigte Dichtringe einheitlicher Ausgestaltung zur Abdichtung der Axialspalte zwischen den Beschlagbauteilen eingesetzt werden. Dadurch, dass ein einziges und konstruktiv einfach gestaltetes Dichtmittel verwendet wird, lassen sich die Kosten für den Beschlag deutlich reduzieren.

Bevorzugterweise umfasst der zweite Dichtring zwei radial nach außen ragende Vorsprünge, von denen einer zwischen die Rückholscheibe und die Betätigungsscheibe und der andere zwischen die Rückholscheibe und das zweite Beschlagteil eingreift. Im Falle einer separaten Rückholscheibe wird hierdurch ein axialer Abstand dieser zum einen gegen die Betätigungsscheibe und zum anderen gegen das zweite Beschlagteil hergestellt. Dies verhindert unerwünschte Klappergeräusche des Beschlags, die von einem Insassen eines Kraftfahrzeuges gegebenenfalls als störend oder als besorgniserregend empfunden werden könnten.

Der Dichtring kann beispielsweise als ein einfacher O-Ring ausgeführt sein. Bevorzugt weist der oder jeder Dichtring einen im Wesentlichen U-förmigen Querschnitt mit gegenüber der Mittenachse des U nach außen strebenden Schenkeln auf, wobei sich die Schenkel in axialer Richtung elastisch an den Begrenzungswänden abstützen. Hierdurch wird eine sichere Abdichtung der Axialspalte erzielt. Bevorzugt zeigen dabei die Schenkel radial nach außen, wodurch Lack sicher abgewiesen wird.

In einer weiter bevorzugten Ausgestaltungsvariante sind die Beschlagteile mittels eines äußeren Halterings in axialer Richtung zueinander gehalten. Dieser Haltering übernimmt, wie eingangs bereits erwähnt, eine Dichtfunktion für den äußeren Axialspalt zwischen den beiden drehbeweglich zueinander gelagerten Beschlagteilen. Hierdurch wird zusätzlich ein Eindringen von Lack verhindert.

Weiter bevorzugt übergreift hierbei der Haltering axial das erste Beschlagteil, ist dort mit dem ersten Beschlagteil umlaufend verbunden und spannt mittels eines gegen die Radialrichtung einwärts abgewinkelten, umlaufenden Bundes das erste Beschlagteil gegen das zweite Beschlagteil vor. Über diese Konstruktion lässt sich die Vorspannung der beiden Beschlagteile zueinander im Hinblick auf ein möglichst geringes Spiel bei genügender Beweglichkeit einstellen. Zur Montage wird der Haltering axial über die Beschlagteile geführt, bis eine gewisse Vorspannung über den sich am zweiten Beschlagteil abstützenden Bund erzielt ist, oder bis eine gewünschte Position erreicht ist, und anschließend mit dem zweiten Beschlagteil umlaufend verbunden. Bei einem derartigen Beschlag ist somit auch das Eindringen von Lack in den Axialspalt zwischen den Beschlagteilen gänzlich verhindert. Gegen das zweite Beschlagteil dichtet der umlaufende Bund und gegen das erste Beschlagteil die umlaufende Verbindung ab. Die umlaufende Verbindung kann beispielsweise über eine Schweißnaht, insbesondere über eine Kehlnaht oder eine Durchschweißung, erzielt werden. Zum Herstellen der Schweißnaht bietet sich insbesondere Laserschweißen an.

Ausführungsbeispiele der Erfindung werden anhand einer Zeichnung näher erläutert. Dabei zeigen:
- Fig. 1: In einem Querschnitt einen ersten Beschlag mit einem gegenüber der Drehachse dichtenden, separaten Dichtmittel, und
- Fig. 2: in einem Querschnitt einen zweiten Beschlag mit einem gegenüber der Drehachse dichtenden, separaten Dichtmittel, wobei die Beschlagteile über einen Haltering axial zueinander gehalten sind.

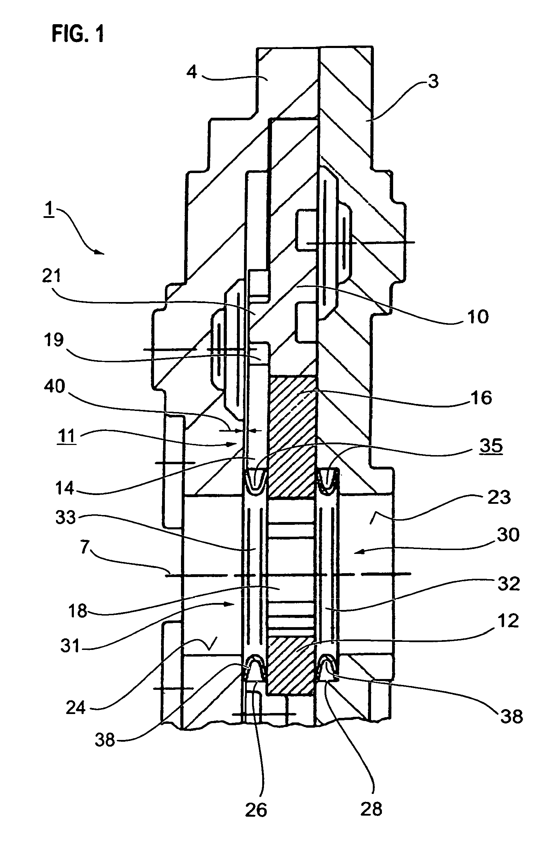

Fig. 1 zeigt in einem Querschnitt einen ersten Beschlag 1, wie er insbesondere zur Verstellung der Lehne eines Fahrzeugsitzes gegenüber einem Sitzunterteil geeignet ist. Der Beschlag 1 umfasst ein erstes Beschlagteil 3 und ein hierzu relativ verdrehbares zweites Beschlagteil 4. Es wird die ein Zylinderkoordinatensystem definierende Drehachse 7 ersichtlich, um die die beiden Beschlagteile 3, 4 zueinander drehbeweglich sind. Fig. 1 zeigt eine Teilansicht des Beschlags 1, wobei das in der Zeichnung unterhalb der Drehachse 7 angeordnete Schnittbild zeichnerisch nicht vollständig dargestellt ist. Zur Anbindung an einen Fahrzeugsitz ist beispielsweise das erste Beschlagteil 3 gegebenenfalls über ein Adapterblech mit dem Sitzunterteil verbunden und das zweite Beschlagteil 4 der Lehne angebunden.

Im Inneren des Beschlags 1 sind drei Sperr-Riegel 10 jeweils unter einem Winkel von 120° zueinander angeordnet. Der in Fig. 1 gezeigte Schnitt verläuft hierbei durch einen dieser Sperr-Riegel 10. Die Sperr-Riegel 10 sind am ersten Beschlagteil 3 in radialer Richtung verschiebbar geführt. In der dargestellten Position befinden sich die Sperr-Riegel 10 in ihrer jeweiligen Sperrposition, wobei nicht dargestellte Sperrzähne an ihrem äußeren radialen Ende in eine Gegenverzahnung des zweiten Beschlagteils 4 eingreifen. Über dieses Rastgesperre ist das zweite Beschlagteil 4 in der gezeigten Position gegenüber dem ersten Beschlagteil 3 verriegelt.

Zur Betätigung des Sperr-Riegels 10 ist im Inneren des Beschlags 1 zwischen dem ersten und dem zweiten Beschlagteil 3 bzw. 4 ein Antriebselement 11 angeordnet. Das Antriebselement 11 ist zweiteilig ausgeführt und umfasst eine Betätigungsscheibe 12 sowie eine Rückholscheibe 14. Dabei ist die Rückholscheibe 14 drehfest mit der Betätigungsscheibe 12 verbunden. Die Betätigungsscheibe 12 umfasst für jeden der Sperr-Riegel 10 einen Exzentemocken 16, an dem sich der jeweilige Sperr-Riegel 10 radial abstützt. Dabei weist der Exzentemocken 16 entlang einer vorgegebenen Bewegungsrichtung einen abnehmenden Radius auf, so dass bei einer entsprechenden Betätigung der Sperr-Riegel 10 radial weiter nach innen geführt werden kann. Zur Betätigung der Betätigungsscheibe 12 weist diese eine zentrale Ausnehmung 18 auf, die als eine Mehrkantausnehmung ausgeführt ist und hierdurch drehfest mit einer nicht gezeigten Antriebswelle verbunden werden kann.

Die Rückholscheibe 14 bewirkt bei einer Betätigung der Betätigungsscheibe 12 eine Rückholung des Sperr-Riegels 10 radial nach innen. Hierzu ist in die Betätigungsscheibe 12 für jeden Sperr-Riegel 10 jeweils eine Kulisse 19 eingebracht, in die ein Zapfen 21 des entsprechenden Sperr-Riegels 10 eingreift. Die Bahn der Kulisse 19 verläuft hierzu mit einem sich in Umfangsrichtung verändernden radialen Abstand zur Drehachse 7.

Sowohl in das erste Beschlagteil 3 als auch in das zweite Beschlagteil 4 ist jeweils eine zentrale Bohrung 23 bzw. 24 eingebracht. Über diese zentrale Bohrungen 23, 24 wird eine Antriebswelle zur drehfesten Anbindung an die Betätigungsscheibe 12 eingeführt. Auch in die Rückholscheibe 14 ist eine zentrale Bohrung 26 eingebracht. Man erkennt, dass die zentrale Bohrung 26 der Rückholscheibe 14 gegenüber den zentralen Bohrungen 23, 24 des ersten und des zweiten Beschlagteils 3 bzw. 4 und gegenüber der zentralen Ausnehmung 18 der Betätigungsscheibe 12 einen größeren Radius aufweist. Der innere Umfang oder Rand der Rückholscheibe 14 ist insofern gegenüber dem inneren Rand des zweiten Beschlagteils 4 und dem inneren Rand der Betätigungsscheibe 12 zurückversetzt.

In das erste Beschlagteil 3 ist eine zur Betätigungsscheibe 12 hin offene, umlaufende Nut 28 eingebracht, wobei der Nutgrund gegenüber der zentralen Ausnehmung 18 der Betätigungsscheibe 12 einen größeren Durchmesser aufweist. Die axiale Breite der Nut 28 entspricht in etwa der axialen Breite der Rückholscheibe 14.

In die Nut 28 und in den sich ergebenden Ringspalt zwischen dem zweiten Beschlagteil 4 und der Betätigungsscheibe 12 ist ein erstes und ein zweites Dichtelement 30 bzw. 31 eingesetzt. Beide Dichtelemente 30, 31 sind hierbei als Dichtringe 32, 33 ausgebildet. Die beiden Dichtringe 32, 33 bilden zusammen ein Dichtmittel 35, welches die Axialspalte der einzelnen Bauteile des Beschlags 1 gegenüber der Drehachse abdichtet.

Es wird ersichtlich, dass der zweite Dichtring 33 sowohl den Axialspalt zwischen dem zweiten Beschlagteil 4 und der Rückholscheibe 14 als auch den Axialspalt zwischen der Rückholscheibe 14 und der Betätigungsscheibe 12 gegenüber der Drehachse abdichtet. Der Axialspalt 40 zwischen dem zweiten Beschlagteil 4 und der Betätigungsscheibe 12 ist eingezeichnet. Die beiden Dichtringe 32 und 33 sind identisch ausgeführt.

Jeder der Dichtringe 32, 33 weist einen in etwa U-förmigen Querschnitt 38 auf, wobei sich die Schenkel des U zur Öffnungsseite hin aufweiten. In den Beschlag 1 sind die Dichtringe 32,33 dabei so eingesetzt, dass die Schenkel radial nach außen gerichtet sind. Die Dichtringe 32, 33 sind aus Polyamid gefertigt. Zur Dichtung stützen sich die Schenkel der Dichtringe 32, 33 in axiale Richtung gegen die entsprechenden Grenzflächen ab.

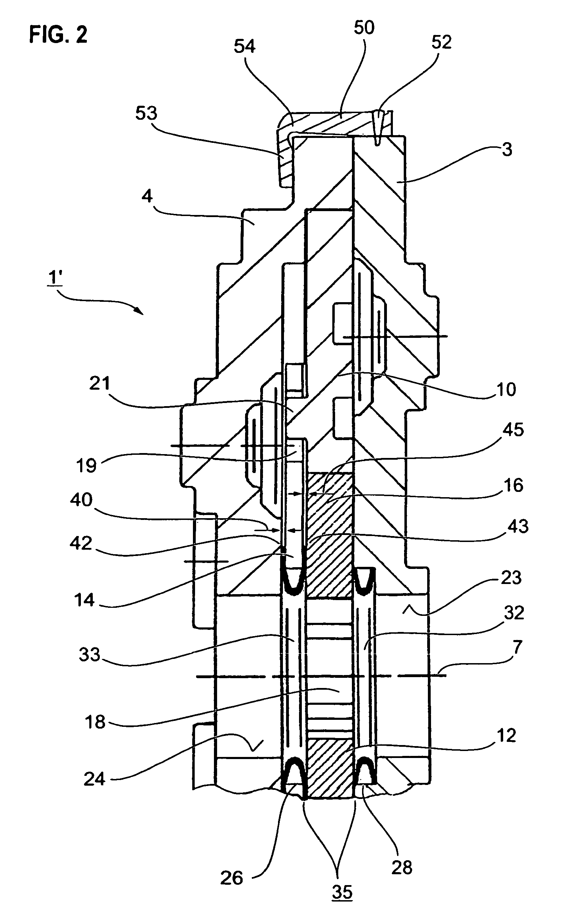

In Fig. 2 ist in einem zur Fig. 1 identischen Schnitt ein weiterer Beschlag 1' dargestellt. Identische Teile weisen hierbei identische Bezugszeichen auf.

Der Beschlag 1' unterscheidet sich von dem in Fig. 1 dargestellten Beschlag 1 dadurch, dass der zweite Dichtring 33 in radialer Richtung einen ersten Vorsprung 42 und einen zweiten Vorsprung 43 aufweist, wobei sich der erste Vorsprung 42 in den Axialspalt 40 zwischen dem zweiten Beschlagteil 4 und der Rückholscheibe 14 und der zweite Vorsprung 43 in den Axialspalt 45 zwischen der Rückholscheibe 14 und der Betätigungsscheibe 12 erstreckt.

Durch die beiden Vorsprünge 42, 43 des zweiten Dichtrings 33 wird eine beabstandete Lagerung der Rückholscheibe 14 zwischen dem zweiten Beschlagteil 4 und der Betätigungsscheibe 12 erzielt. Hierdurch wird ein klapperfreier Beschlag 1' geschaffen, da die Rückholscheibe 14 durch diese in Folge des zweiten Dichtrings 33 vorgegebene Beabstandung nicht mehr gegen benachbarte Grenzflächen anstossen kann.

Weiter weist der Beschlag 1' gegenüber dem Beschlag 1 einen äußeren Haltering 50 auf, über den die beiden Beschlagteile 3, 4 axial zueinander gehalten sind. Der Haltering 50 ist hierbei mit dem ersten Beschlagteil 3 durch eine umlaufende Durchschweißung 52 fest verbunden. In der montierten Position erzeugt dabei der Haltering 50 mittels eines überstreckten, radial nach innen ausgerichteten umlaufenden Bundes 53 eine Vorspannung der beiden Beschlagteile 3, 4 zueinander in axialer Richtung. Über eine an der Innenschulter des Halterings 50 angebrachte Nut 54 kann hierbei die erreichbare Vorspannung eingestellt werden. Über die umlaufende Durchschweißung 52 sowie den anliegenden, umlaufenden Bund 53 weist der Beschlag 1' eine zusätzliche Abdichtung des Axialspaltes zwischen den beiden Beschlagteilen 3, 4 auf.

Über die beiden innen angeordneten Dichtringe 32 und 33 werden die Axialspalte zwischen den einzelnen Bauteilen der dargestellten Beschläge 1 und 1' gegenüber der Drehachse 7 abgedichtet. Bei einem Tauchlackierverfahren und insbesondere bei einem kathodischen Tauchlackierverfahren gelangt somit zwar Lack in die zentrale Öffnung der Beschläge 1, 1'. Ein Eindringen des Lacks über die Axialspalte zwischen den einzelnen Bauteilen bis hin zu den äußeren Rastzähnen der Sperr-Riegels 10 ist jedoch sicher verhindert. Ein Herabsetzen der Crashfestigkeit durch eingedrungenen Lack ist nicht mehr zu erwarten. Zusätzlich dichtet der äußere Haltering 50 des zweiten Beschlags 1' den Radialspalt zwischen den Beschlagteilen 3 und 4 ab.

### Bezugszeichenliste

- 1: Beschlag
- 3: erstes Beschlagteil
- 4: zweites Beschlagteil
- 7: Drehachse
- 10: Sperr-Riegel
- 11: Antriebselement
- 12: Betätigungsscheibe
- 14: Rückholscheibe
- 16: Exzentemocken
- 18: zentrale Ausnehmung
- 19: Kulisse
- 21: Zapfen
- 23: zentrale Bohrung, erstes Beschlagteil
- 24: zentrale Bohrung, zweites Beschlagteil
- 26: zentrale Bohrung, Rückholscheibe
- 28: Nut
- 30: erstes Dichtelement
- 31: zweites Dichtelement
- 32: erster Dichtring
- 33: zweiter Dichtring
- 35: Dichtmittel
- 38: Querschnitt
- 40: Axialspalt
- 42: erster Vorsprung
- 43: zweiter Vorsprung
- 45: Axialspalt
- 50: Haltering
- 52: Durchschweißung
- 53: Bund
- 54: Nut

## Patentansprüche

1. Beschlag (1,1'), insbesondere für einen Fahrzeugsitz, mit einem ersten Beschlagteil (3), mit einem relativ zum ersten Beschlagteil (3) um eine Drehachse (7) verdrehbaren zweiten Beschlagteil (4), mit einem an dem ersten Beschlagteil (3) in einer radialen Verschieberichtung verschiebbar geführten Sperr-Riegel (10) zur Ausbildung eines Gesperres mit dem zweiten Beschlagteil (4), und mit einem zwischen den Beschlagteilen (3,4) beweglich angeordneten Antriebselement (11) zur radialen Ausstellung und Rückholung des Sperr-Riegels (10), wobei das Antriebselement (11) eine Betätigungsscheibe (12) mit einem Exzenternocken (16) zur radialen Abstützung des Sperr-Riegels (10) und eine in axialer Richtung zum zweiten Beschlagteil (4) versetzte Rückholscheibe (14) zur Rückholung des Sperr-Riegels (10) umfasst, und wobei in das Antriebselement (11) eine zentrale Ausnehmung (18) zur Aufnahme einer Antriebswelle eingebracht ist,
**dadurch gekennzeichnet,**
**dass** zu einer Abdichtung eines jeweiligen Axialspaltes (40) zwischen dem Antriebselement (11) und den Beschlagteilen (3,4) als ein elastisches Dichtmittel (35) ein erstes Dichtelement (30) zwischen dem ersten Beschlagteil (3) und der Betätigungsscheibe (12), und ein zweites Dichtelement (31) zwischen dem zweiten Beschlagteil (4) und der Rückholscheibe (14) angeordnet ist.

2. Beschlag (1,1') nach Anspruch 1,
**dadurch gekennzeichnet,**
**dass** das erste Beschlagteil (3) eine zentrale Bohrung (23) aufweist, in die eine zum Antriebselement (11) hin offene Nut (28) eingesenkt ist, deren Nutgrund gegenüber der Ausnehmung (18) einen größeren Durchmesser aufweist, und dass als erstes Dichtelement (30) ein Dichtring (32) in die Nut (28) eingesetzt ist.

3. Beschlag (1,1') nach Anspruch 1 oder 2,
**dadurch gekennzeichnet,**
**dass** die zentrale Ausnehmung (18) in die Betätigungsscheibe (12) und jeweils eine zentrale Bohrung (26 bzw. 24) in die Rückholscheibe (14) sowie in das zweite Beschlagteil (4) eingebracht ist, wobei die zentrale Bohrung (26) der Rückholscheibe (14) gegenüber der zentralen Ausnehmung (18) der Betätigungsscheibe (12) und gegenüber der Bohrung (24) des zweiten Beschlagteils (4) einen größeren Durchmesser aufweist, und dass als zweites Dichtelement (31) ein Dichtring (33) in den resultierenden Ringspalt zwischen dem zweiten Beschlagteil (4) und der Betätigungsscheibe (12) eingesetzt ist.

4. Beschlag (1,1') nach Anspruch 3,
**dadurch gekennzeichnet,**
**dass** der zweite Dichtring (33) zwei radial nach außen ragende Vorsprünge (42,43) umfasst, von denen einer zwischen die Rückholscheibe (14) und die Betätigungsscheibe (12) und der andere zwischen die Rückholscheibe (14) und dem zweiten Beschlagteil (4) greift.

5. Beschlag (1,1) nach Anspruch 2 oder 3,
**dadurch gekennzeichnet,**
**dass** die axiale Breite der Nut (28) in etwa der axialen Breite der Rückholscheibe (14) entspricht, und dass in den Ringspalt und in die Nut (28) identische Dichtringe (32,33) eingesetzt sind.

6. Beschlag (1,1') nach einem der Ansprüche 2 bis 5,
**dadurch gekennzeichnet,**
**dass** der oder jeder Dichtring (32,33) einen im Wesentlichen U-förmigen Querschnitt mit nach außen strebenden Schenkeln aufweist, wobei sich die Schenkel in axialer Richtung elastisch an den Begrenzungswänden abstützen.

7. Beschlag (1,1') nach Anspruch 6,
**dadurch gekennzeichnet,**
**dass** die Schenkel radial nach außen zeigen.

8. Beschlag (1,1') nach einem der vorhergehenden Ansprüche,
**dadurch gekennzeichnet,**
**dass** das Dichtmittel (35) aus Polyamid gefertigt ist.

9. Beschlag (1,1') nach einem der vorhergehenden Ansprüche,
**dadurch gekennzeichnet,**
**dass** die Beschlagteile (3,4) mittels eines äußeren Halterings (50) in axialer Richtung zueinander gehalten sind.

10. Beschlag (1,1') nach Anspruch 9,
**dadurch gekennzeichnet,**
**dass** der Haltering (50) axial das erste Beschlagteil (3) übergreift, dort mit dem ersten Beschlagteil (3) umlaufend verbunden ist und mittels eines gegen die Radialrichtung einwärts abgewinkelten, umlaufenden Bundes (53) das erste Beschlagteil (3) gegen das zweite Beschlagteil (4) vorspannt.

## Claims

1. Fitting (1, 1'), in particular for a vehicle seat, with a first fitting part (3), with a second fitting part (4) which is rotatable about an axis of rotation (7) relative to the first fitting part (3), with a locking latch (10) which is guided displaceably in a radial direction of displacement on the first fitting part (3) and is intended for forming a locking mechanism with the second fitting part (4), and with a driving element (11) which is arranged movably between the fitting parts (3, 4) and is intended for radially deploying and returning the locking latch (10), wherein the driving element (11) comprises an actuating disc (12) with an eccentric cam (16) for radially supporting the locking latch (10) and a return disc (14) which is offset in the axial direction with respect to the second fitting part (4) and is intended for returning the locking latch (10), and wherein a central recess (18) for receiving a drive shaft is placed into the driving element (11), **characterized in that**, in order to seal a respective axial gap (40) between the driving element (11) and the fitting parts (3, 4), as an elastic sealing means (35) a first sealing element (30) is arranged between the first fitting part (3) and the actuating disc (12) and a second sealing element (31) is arranged between the second fitting part (4) and the return disc (14).

2. Fitting (1, 1') according to Claim 1, **characterized in that** the first fitting part (3) has a central bore (23) into which is sunk a groove (28) which is open towards the driving element (11) and the groove base of which has a larger diameter than the recess (18), and **in that**, as the first sealing element (30), a sealing ring (32) is inserted into the groove (28).

3. Fitting (1, 1') according to Claim 1 or 2, **characterized in that** the central recess (18) is introduced into the actuating disc (12), and central bores (26 and 24) are respectively introduced into the return disc (14) and into the second fitting part (4), wherein the central bore (26) of the return disc (14) has a larger diameter than the central recess (18) of the actuating disc (12) and than the bore (24) of the second fitting part (4), and **in that**, as the second sealing element (31), a sealing ring (33) is inserted into the resulting annular gap between the second fitting part (4) and the actuating disc (12).

4. Fitting (1, 1') according to Claim 3, **characterized in that** the second sealing ring (33) comprises two radially outwardly projecting projections (42, 43), of which one engages between the return disc (14) and the actuating disc (12) and the other between the return disc (14) and the second fitting part (4).

5. Fitting (1, 1') according to Claim 2 or 3, **characterized in that** the axial width of the groove (28) approximately corresponds to the axial width of the return disc (14), and **in that** identical sealing rings (32, 33) are inserted into the annular gap and into the groove (28).

6. Fitting (1, 1') according to one of Claims 2 to 5, **characterized in that** the or each sealing ring (32, 33) has a substantially U-shaped cross section with outwardly reaching limbs, wherein the limbs are supported elastically in the axial direction on the boundary walls.

7. Fitting (1, 1') according to Claim 6, **characterized in that** the limbs point radially outwards.

8. Fitting (1, 1') according to one of the preceding Claims, **characterized in that** the sealing means (35) is manufactured from polyamide.

9. Fitting (1, 1') according to one of the preceding Claims, **characterized in that** the fitting parts (3, 4) are held with respect to each other in the axial direction by means of an outer holding ring (50).

10. Fitting (1, 1') according to Claim 9, **characterized in that** the retaining ring (50) engages axially over the first fitting part (3), is connected there to the first fitting part (3) in an encircling manner and prestresses the first fitting part (3) against the second fitting part (4) by means of an encircling collar (53) which is angled inwards counter to the radial direction.

## Revendications

1. Ferrure (1, 1'), notamment pour un siège de véhicule, comprenant une première partie de ferrure (3), une deuxième partie de ferrure (4) pouvant tourner autour d'un axe de rotation (7) par rapport à la première partie de ferrure (3), une barrette de verrouillage (10) guidée de manière déplaçable dans une direction de déplacement radiale sur la première partie de ferrure (3) pour réaliser un enclenchement avec la deuxième partie de ferrure (4), et un élément d'entraînement (11) disposé de manière mobile entre les parties de ferrure (3, 4) pour sortir radialement et ramener la barrette de verrouillage (10), l'élément d'entraînement (11) comprenant un disque d'actionnement (12) avec une came excentrique (16) pour le support radial de la barrette de verrouillage (10) et un disque de rappel (14) décalé dans la direction axiale par rapport à la deuxième partie de ferrure (4) pour le rappel de la barrette de verrouillage (16), et un évidement central (18) étant pratiqué dans l'élément d'entraînement (11) pour recevoir un arbre d'entraînement,
**caractérisée en ce que**
pour réaliser une étanchéité d'une fente axiale respective (40) entre l'élément d'entraînement (11) et les parties de ferrure (3, 4) sous forme de moyen d'étanchéité élastique (35), un premier élément d'étanchéité (30) est disposé entre la première partie de ferrure (3) et le disque d'actionnement (12), et un deuxième élément d'étanchéité (31) est disposé entre la deuxième partie de ferrure (4) et le disque de rappel (14).

2. Ferrure (1, 1') selon la revendication 1,
**caractérisée en ce que**
la première partie de ferrure (3) présente un alésage central (23), dans lequel est renfoncée une rainure (28) ouverte vers l'élément d'entraînement (11), dont le fond de rainure présente, par rapport à l'évidement (18), un plus grand diamètre, et **en ce que** l'on insère une bague d'étanchéité (32) dans la rainure (28) en tant que premier élément d'étanchéité (30).

3. Ferrure (1, 1') selon la revendication 1 ou 2,
**caractérisée en ce que**
l'évidement central (18) est pratiqué dans le disque d'actionnement (12) et à chaque fois un alésage central (26, respectivement 24) est pratiqué dans le disque de rappel (14) ainsi que dans la deuxième partie de ferrure (4), l'alésage central (26) du disque de rappel (14) présentant un plus grand diamètre par rapport à l'évidement central (18) du disque d'actionnement (12) et par rapport à l'alésage (24) de la deuxième partie de ferrure (4), et **en ce qu'**une bague d'étanchéité (33) est insérée en tant que deuxième élément d'étanchéité (31) dans la fente annulaire résultante entre la deuxième partie de ferrure (4) et le disque d'actionnement (12).

4. Ferrure (1, 1') selon la revendication 3,
**caractérisée en ce que**
la deuxième bague d'étanchéité (33) comprend deux saillies (42, 43) saillant radialement vers l'extérieur, dont l'une vient en prise entre le disque de rappel (14) et le disque d'actionnement (12) et l'autre entre le disque de rappel (14) et la deuxième partie de ferrure (4).

5. Ferrure (1, 1') selon la revendication 2 ou 3,
**caractérisée en ce que**
la largeur axiale de la rainure (28) correspond approximativement à la largeur axiale du disque de rappel (14), et **en ce que** des bagues d'étanchéité identiques (32, 33) sont insérées dans la fente annulaire et dans la rainure (28).

6. Ferrure (1, 1') selon l'une quelconque des revendications 2 à 5,
**caractérisée en ce que**
la ou chaque bague d'étanchéité (32, 33) présente une section transversale essentiellement en forme de U avec des branches portant vers l'extérieur, les branches s'appuyant dans la direction axiale élastiquement contre les parois de limitation.

7. Ferrure (1, 1') selon la revendication 6,
**caractérisée en ce que**
les branches sont orientées radialement vers l'extérieur.

8. Ferrure (1, 1') selon l'une quelconque des revendications précédentes,
**caractérisée en ce que**
le moyen d'étanchéité (35) est fabriqué en polyamide.

9. Ferrure (1, 1') selon l'une quelconque des revendications précédentes,
**caractérisée en ce que**
les parties de ferrure (3, 4) sont retenues l'une par rapport à l'autre au moyen d'une bague de retenue extérieure (50) dans la direction axiale.

10. Ferrure (1, 1') selon la revendication 9,
**caractérisée en ce que**
la bague de retenue (50) vient en prise axialement par le dessus avec la première partie de ferrure (3), est connectée avec la première partie de ferrure (3) sur sa périphérie, et précontraint, au moyen d'un épaulement périphérique (53) coudé vers l'intérieur vers la direction radiale, la première partie de ferrure (3) contre la deuxième partie de ferrure (4).
